(19) Europäisches Patentamt
European Patent Office
Office européen des brevets

(11) Numéro de publication : 0 033 706
B1

(12) **FASCICULE DE BREVET EUROPÉEN**

(45) Date de publication du fascicule du brevet : **30.01.85**

(51) Int. Cl.⁴ : **G 01 G 21/24**, G 01 G 21/23, G 01 G 7/06

(21) Numéro de dépôt : **81400165.7**

(22) Date de dépôt : **03.02.81**

(54) **Récepteur de charge à fixation perfectionnée du moyen d'équilibrage.**

(30) Priorité : **04.02.80 FR 8002377**

(43) Date de publication de la demande : **12.08.81 Bulletin 81/32**

(45) Mention de la délivrance du brevet : **30.01.85 Bulletin 85/05**

(84) Etats contractants désignés : **AT BE CH DE GB IT LI LU NL SE**

(56) Documents cités :
**AU-D- 3 792 378**
**DE-A- 1 449 941**
**US-A- 4 037 675**
**US-A- 4 072 202**
**US-A- 4 196 784**
**US-A- 4 196 784**

(73) Titulaire : **TESTUT-AEQUITAS**
**8, rue Popincourt**
**F-75011 Paris (FR)**

(72) Inventeur : **Dauge, Gilbert Victor**
**15, Quai du Pré Long**
**F-77400 Lagny (FR)**
Inventeur : **Langlais, Jacques Fernand**
**38, rue des Ecoles**
**F-77000 Coudray Montceaux (FR)**
Inventeur : **Quehen, Daniel Julien Pierre**
**26-28, avenue Charles de Gaulle**
**F-91380 Chilly Mazarin (FR)**

(74) Mandataire : **Corre, Jacques Denis Paul et al**
**Cabinet Regimbeau 26, Avenue Kléber**
**F-75116 Paris (FR)**

**EP 0 033 706 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

## Description

La présente invention concerne d'une manière générale les instruments de pesage, et plus particulièrement leurs parties dénommées récepteur de charge.

On connaît déjà des récepteurs de charge dans lesquels la force antagoniste à la charge est fournie par un organe massif, qui possède au moins une zone, du genre étranglement, aménagée pour avoir une réponse élastique aux sollicitations. De tels récepteurs de charge ont été décrits dans les demandes de brevet Européen EP-A-0 017 581, EP-A-0 029 776 et EP-A-0 018 919 au nom de la Demanderesse.

Un récepteur de charge de ce type, pour instrument de pesage, est également décrit dans la demande de brevet australien AU-D-37923/78. Le récepteur de charge décrit dans ce document, d'une façon générale, comprend un organe massif composé de deux montants verticaux, l'un fixé à une embase support, l'autre supportant un plateau porte-charge, et qui sont reliés par deux traverses horizontales munies d'étranglement, pour former un parallélogramme déformable et fournir une réponse élastique aux sollicitations dues aux charges disposées sur ledit plateau.

Plus précisément, l'organe massif est relié à l'embase support et au plateau porte-charge par l'intermédiaire de plusieurs boulons en prise dans des alésages filetés ménagés dans les montants verticaux pour assurer un contact serré entre l'organe massif et l'embase support d'une part et l'organe massif et le plateau porte-charge d'autre part.

La Demanderesse a constaté qu'avec un tel agencement des déformations susceptibles de perturber la mesure sont inévitablement induites dans l'organe massif.

Le problème se pose de prévoir une fixation entre l'organe massif et le reste du récepteur de charge sans induire dans cet organe massif des déformations qui soient de nature à perturber la mesure.

La présente invention vient, telle que définie dans la revendication 1, apporter une solution avantageuse à ce problème.

Dans le récepteur de charge proposé, pour instrument de pesage, les liaisons entre l'organe massif et le reste du récepteur de charge peuvent être réalisées exclusivement par des organes de fixations tels que des chevilles ou goupilles, logés dans des perçages prévus latéralement dans l'organe massif, lesdits organes de fixation étant solidaires du reste du récepteur de charge et définissant le seul contact existant entre l'organe massif et le reste du récepteur de charge, de façon à permettre un déplacement relatif sans glissement ni friction, entre ces éléments. On évite ainsi des mouvements glissants relatifs entre l'organe massif et le reste du récepteur de charge, dans la zone entourant leurs points de fixation, de tels mouvements glissants relatifs étant générateurs d'hystérésis.

Plus précisément, les perçages et les organes de fixations peuvent être placés au voisinage de la zone centrale axiale de l'organe massif, le long de laquelle les déformations sont minimales. Ici le mot « axial » vise l'axe de l'organe massif considéré en section droite dans son épaisseur. Et les mots « zone centrale » visent la zone entourant cet axe dans l'épaisseur de l'organe massif, par opposition à la zone proche de ses bords ou parois. Bien entendu, l'axe de l'organe massif suit la géométrie propre de celui-ci, et peut par conséquent être curviligne.

Plus précisément encore, les perçages peuvent être placés sensiblement sur la ligne neutre en déformation de l'organe massif.

Dans un mode de réalisation préférentiel, les organes de fixation sont réalisés par des paires de chevilles, placées sensiblement symétriquement, le long de l'axe de l'organe massif, sur l'intervalle séparant une zone du genre étranglement d'une autre zone étranglée ou d'une extrémité de l'organe massif.

Dans un premier mode de réalisation, l'organe massif est un ensemble monobloc à quatre étranglements formant parallélogramme déformable, en particulier de géométrie rectangulaire ou en anneau ; deux parties opposées de cet ensemble monobloc sont reliées par des paires d'organes de fixation, du type cheville, respectivement à une pièce liée au bâti et à une pièce liée au plateau porte-charge. Ce mode de réalisation s'applique en particulier aux balances de ménage.

Selon un autre mode de réalisation de l'invention, l'organe massif est une lame de flexion à un seul étranglement, sollicitée de part et d'autre de cet étranglement par deux pièces-leviers qui sont montées sensiblement symétriquement en articulation d'une part avec le bâti et d'autre part avec le plateau porte-charge ; les deux pièces-leviers sont liées chacune à la lame de flexion par une paire d'organes de fixation du type cheville.

D'autres caractéristiques et avantages de formes de réalisation de l'invention apparaîtront à la lecture de la description détaillée qui va suivre, faite en référence aux dessins annexés, sur lesquels :

la figure 1 est une vue latérale du premier mode de réalisation de l'invention, le parallélogramme déformable ayant la forme générale d'un anneau ;

la figure 2 est une vue en coupe suivant la ligne A-A de la figure 1 ;

les figures 3 et 4 illustrent respectivement en vue de dessus avant pliage et en vue de bout après pliage l'une des pièces du récepteur de charge de la figure 1 ;

les figures 5 et 6 illustrent une variante de la fixation du transducteur capacitif dans un récepteur de charge du type illustré à la figure 1 ;

la figure 7 est une vue partielle illustrant le cas où l'organe massif est une lame de flexion ;

la figure 8 est une vue en coupe schématique d'un pèse-personne comportant la lame de flexion de la figure 7 ; et

la figure 9 est une vue partielle de dessus du pèse-personne de la figure 8.

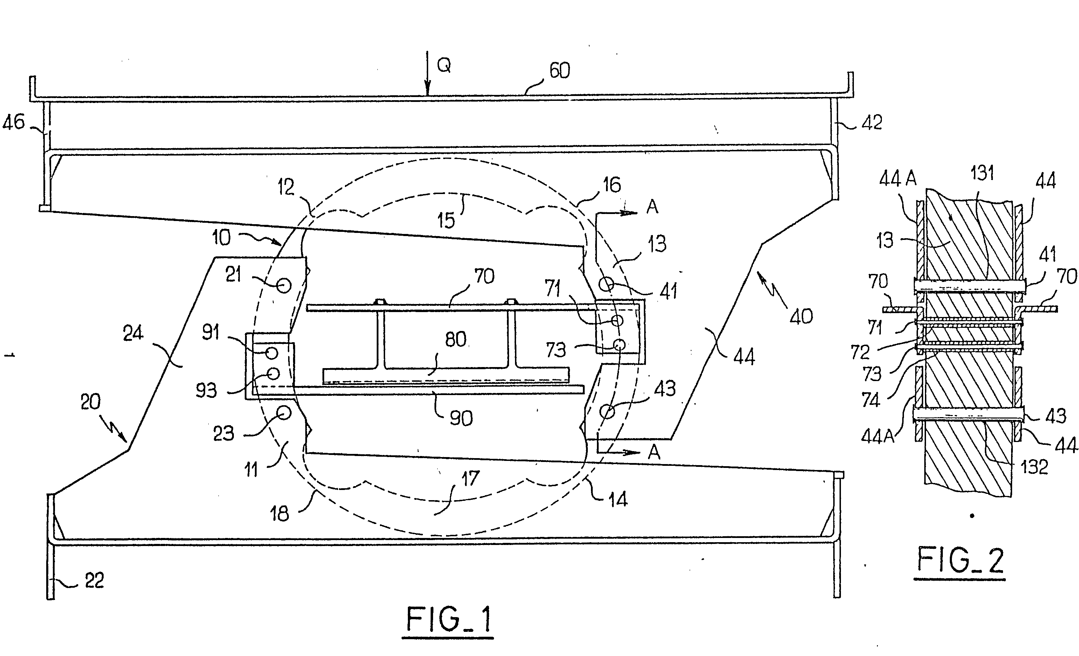

Sur la figure 1, un parallélogramme déformable de géométrie annulaire, désigné par la référence générale 10, est défini par quatre arcs 11, 13, 15 et 17, séparés par quatre étranglements 12, 14, 16 et 18.

Le reste du récepteur de charge comprend tout d'abord une pièce inférieure 20, comportant en partie basse deux pieds 22 et 26 coopérant avec le bâti de l'appareil, et en partie haute deux plaques verticales, telles que 24, formant fourche. De la même manière, le haut du récepteur de charge comporte une pièce 40, définie par deux plaques telles que 44 formant elles aussi fourche, et deux saillies supérieures 42 et 46 qui viennent se fixer sur un plateau porte-charge 60, qui reçoit une charge Q.

Les deux plaques 24 viennent se fixer par des chevilles 21 et 23 dans l'arc 11 de l'organe massif annulaire. De l'autre côté, les deux plaques 44 viennent se fixer par des chevilles 41 et 43 dans l'arc 13 de l'organe massif annulaire. De ce même côté, deux autres dispositifs de fixation 71 et 73 viennent solidariser une fourchette sur l'arc 13, et cette fourchette se prolonge par une membrure horizontale 70, dans laquelle viennent se fixer par exemple par soudage des tiges verticales solidaires d'une première électrode 80. A son tour, l'arc 11 de l'organe massif annulaire soutient par deux dispositifs de fixation 91 et 93 une fourchette solidaire d'une plaque horizontale allongée 90 qui définit l'autre électrode, ou soutient un matériau propre à constituer la seconde électrode.

La figure 2 montre avec plus de détail la fixation de la pièce 40 sur l'anneau 10, en son arc 13. Dans cet arc 13 sont réalisés deux alésages 131 et 132, qui logent serrées les deux chevilles 41 et 43 déjà citées. Les chevilles 41 et 43 viennent à leur tour se loger dans des trous percés aux endroits convenables des deux pièces verticales 44 et 44A. Bien entendu, au lieu d'alésages traversants, les fixations peuvent se loger dans des trous borgnes. De même, au lieu de chevilles on peut utiliser des poinçonnages ou creusures pratiqués dans la pièce 40.

On notera que la coupe de la figure 2 est réalisée au niveau des chevilles selon l'axe en trait tireté et de contour annulaire qui peut être considéré comme l'axe central de l'organe massif 10, pris dans son épaisseur. Ici, les chevilles sont donc placées exactement sur l'axe de l'organe massif. Il a été observé que des fixations légèrement décalées pouvaient convenir, pourvu que la fixation ne soit pas en bordure de l'anneau, suivant son épaisseur ; en d'autres termes, il faut rester au voisinage de la zone centrale axiale de l'organe massif. Dans le cas présent, les chevilles sont en fait placées sur l'axe, qui dans le cas d'un anneau correspond sensiblement à la ligne neutre en déformation de flexion.

Il convient d'observer également que les deux chevilles 41 et 43 sont placées de manière sensiblement symétrique, le long de l'axe de l'organe annulaire 10, sur l'intervalle qui sépare l'étranglement 16 de l'étranglement 14. Les deux chevilles sont placées respectivement à faible distance des étranglements associés, en préservant toutefois les qualités élastiques de ceux-ci.

On notera également que le seul contact entre les pièces telles que 44 et l'anneau 10 est réalisé par l'intermédiaire des chevilles 41 et 43, un jeu existant par ailleurs entre la pièce 44 et l'arc 13. Ceci permet un déplacement relatif sans glissement entre l'organe massif qui est ici de forme annulaire et le reste du récepteur de charge, d'où une fixation mécaniquement réversible entre les deux ensembles.

La figure 2 fait également apparaître la fixation de l'une des électrodes dans le cas préférentiel d'un transducteur capacitif. La pièce 70 comporte deux lèvres latérales repliées, qui viennent se fixer au voisinage de la partie médiane de l'arc 13 par des chevilles 71 et 73, lesquelles passent dans des gaines cylindriques isolantes 72 et 74, réalisées par exemple en matière plastique dure. Le même montage est prévu pour l'autre électrode, dont le support 90 présente lui aussi deux lèvres venant chevaucher l'arc 11 de part et d'autre de celui-ci, et se fixer par des chevilles 91 et 92, qui traversent l'arc 11 par l'intermédiaire de cylindres isolants, non représentés.

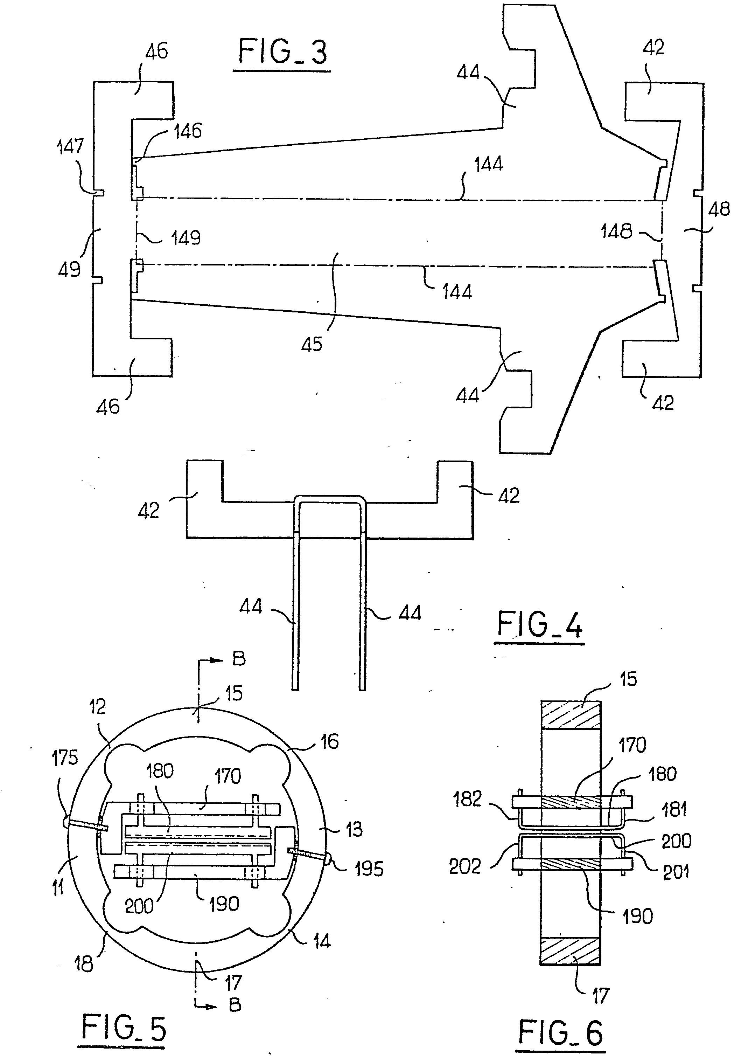

Les figures 3 et 4 font apparaître plus précisément la nature de la pièce 40, qui est la même que celle de la pièce 20. Sur la figure 3, la pièce 40 est illustrée avant pliage. On voit qu'elle est de structure entièrement symétrique par rapport à son axe longitudinal, avec deux ailes 44, une partie centrale 45, et deux parties d'extrémités 48 et 49 solidaires respectivement de deux ailettes telles que 42 d'une part et 46 d'autre part. Les ailes 44 sont pliées vers le bas le long des axes 144. L'extrémité 48 est elle aussi pliée vers le bas selon l'axe 148 ; de même l'extrémité 49 est pliée vers le bas selon l'axe 149. On engage alors les ergots tels que 146 dans les fentes telles que 147, avec une fixation par repliement ou par soudage. La pièce a alors la forme qui apparaît en vue latérale sur la figure 1, et en vue de bout sur la figure 4.

Les figures 5 et 6 illustrent une variante de la fixation des électrodes capacitives. Bien que cela ne soit pas absolument nécessaire, les deux électrodes 180 et 200 sont ici réglables en position relative par l'intermédiaire de tiges sur leurs supports 170 et 190. Le support 170 est fixé par au moins une vis 175 qui traverse radialement l'arc 11, tandis que le support 190 est fixé par au moins une vis qui traverse radialement l'arc 13. Pour éviter là encore des glissements relatifs entre les supports d'électrodes et l'anneau, leur contact est avantageusement limité à une rondelle ou un bossage entourant la vis de fixation. La figure 6 est une vue en coupe suivant la ligne de coupe B-B de la figure 5, et fait mieux apparaître la forme exacte des électrodes 180 et 200, qui sont réalisées sous la forme d'une plaque de tôle où sont découpées les tiges, celles-ci étant ensuite repliées à angle droit, en 181 et 182, 201 et 202 par exemple.

Dans ce qui précède, l'organe massif est constitué sous la forme d'un anneau. Une telle structure a déjà été décrite dans la demande de brevet Européen EP-A-0 029 776, à laquelle on se référera pour de plus amples détails. L'organe massif peut avoir en variante la géométrie d'un véritable parallélogramme. Des exemples d'une telle géométrie sont décrits dans la demande de brevet EP-A-0 017 581 au nom de la demanderesse, dont le contenu descriptif est également incorporé à la présente description, pour illustrer d'autres exemples avantageux d'application de l'invention.

L'invention s'applique également à d'autres réalisations de l'organe massif qui définit de manière élastique la force antagoniste à la charge.

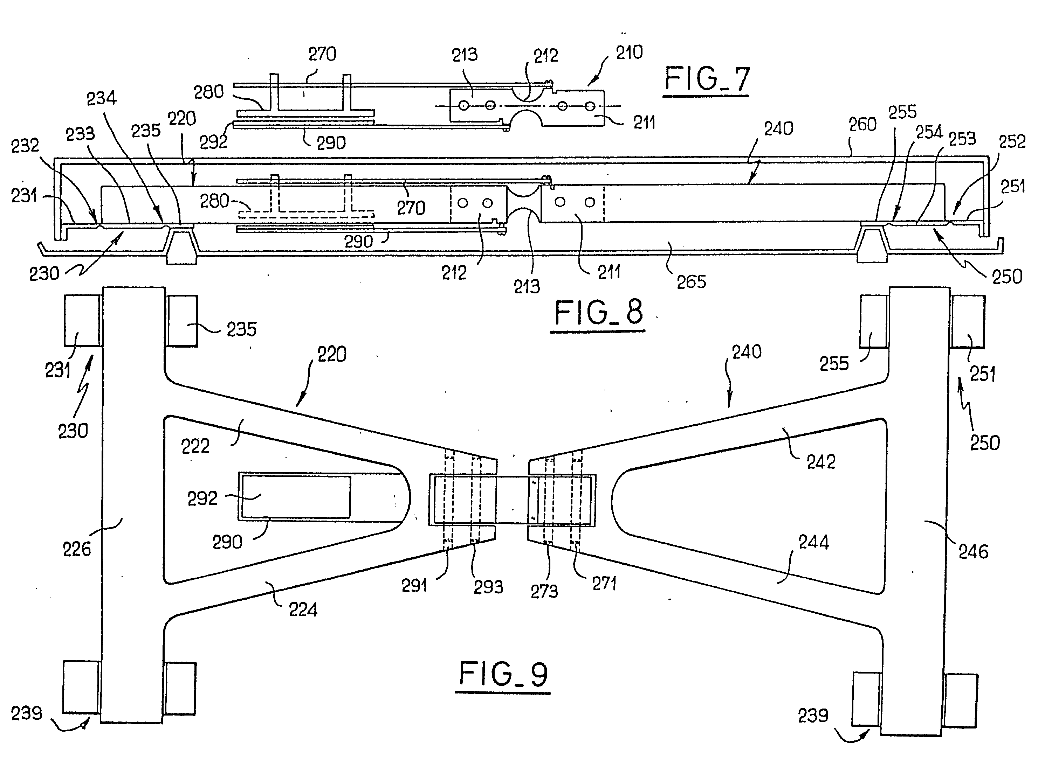

Dans de nombreux cas, en particulier celui des pèse-personnes, il est avantageux d'utiliser une lame de flexion pour définir cette force antagoniste. Une telle lame de flexion possède le plus souvent la forme illustrée sur la figure 7. Définie par des génératrices parallèles, et illustrée ici en section droite, la lame de flexion possède deux parties 211 et 213, séparées par un étranglement 212. Au voisinage de l'étranglement 212, d'un côté de celui-ci, ici en partie supérieure, vient se fixer le support 270 d'une première électrode 280. De l'autre côté de l'étranglement 212, et en partie inférieure, vient se fixer le support 290 d'une seconde électrode 292. Dans l'exemple représenté, l'électrode 280 possède des tiges qui permettent de régler sa position par rapport à son support 270, alors que l'électrode 292 est fixée directement sur son support 290.

La figure 8 illustre l'application d'un récepteur de charge à lame de flexion selon la figure 7 au cas particulier d'un pèse-personne plat. Celui-ci comporte un plateau supérieur porte-charge 260, et un bâti inférieur 265 muni de pieds. Des moyens d'articulation 230 et 250, ainsi que 239 et 259 (figure 9) sont définis par des charnières élastiques, constituées d'une tôle mince munie d'étranglements.

Ainsi, en partie gauche de la figure 8, on voit une telle double charnière élastique, désignée par la référence générale 230, une autre double charnière du même genre étant désignée par la référence générale 250. Les références numériques varient dans les deux cas de vingt unités. On ne décrira donc que la double charnière 230, qui comporte une première partie 231, solidaire du plateau porte-charge 260 ; cette première partie 231 est séparée par un étranglement allongé 232 d'une partie centrale 233, laquelle est solidaire d'une pièce-levier désignée par la référence générale 220. A son tour, la partie centrale de la charnière élastique 233 est reliée par un étranglement 234 à la partie terminale 235, qui vient s'appuyer sur le bâti inférieur 265 au niveau de l'un des pieds. Comme on le voit sur la figure 9, les doubles charnières ainsi conçues sont au nombre de quatre, et les étranglements sont alignés deux à deux, par exemple entre la pièce 231 et la pièce 239 de la figure 9.

Ces pièces 231 et 239 de la figure 9 viennent soutenir le bras transversal 226 de la pièce-levier 220, et ce bras transversal 226 est solidaire de deux bras obliques 220 et 224, qui viennent se réunir au centre de la figure pour former une sorte de fourchette entourant la lame de flexion 210, mais sans avoir de contact de friction avec elle. Le même montage est réalisé en ce qui concerne l'autre pièce-levier 240, dont le bras transversal 246 s'appuie en articulation sur les éléments 250 et 259. Là encore, ce bras transversal 246 est solidaire de deux bras obliques 242 et 244, qui viennent se réunir pour entourer l'autre extrémité 211 de la lame de flexion 210, sans avoir de contact direct avec celle-ci.

Enfin, suivant la caractéristique essentielle de la présente invention, chacune des pièces-leviers 220 et 240 coopère avec l'extrémité de la lame de flexion qui lui est associée par l'intermédiaire de chevilles, 271 et 273 pour la pièce 240, 291 et 293 pour la pièce 220, ces chevilles étant logées serrées dans des alésages pratiqués dans la lame de flexion 210. Là aussi, les variantes précédemment décrites (perçages borgnes et/ou creusures saillantes des pièces 220 et 240) sont applicables.

A l'examen de la figure 7, on voit que comme précédemment les alésages pratiqués dans la lame de flexion le sont au niveau de l'axe longitudinal de celle-ci, donc en zone centrale, et de préférence sensiblement sur la ligne neutre de déformation de la lame de flexion.

Là encore, les deux chevilles de chaque paire, par exemple 271 et 273, sont placées de manière sensiblement symétrique selon l'axe de la lame de flexion, sur l'intervalle qui sépare l'extrémité droite de la pièce 211 du bord de l'étranglement 212. A première vue, il semble sur la figure 7 que cette symétrie ne soit pas tout à fait vérifiée. En fait comme le transducteur capacitif est ici fixé tout près de l'étranglement, il faut fixer la cheville 273 assez loin pour préserver les qualités élastiques non seulement au niveau de l'étranglement, mais aussi à celui de la fixation d'électrode voisine de l'étranglement. Avec cette réserve, on constate également que les deux chevilles sont placées sensiblement au quart et aux trois quarts de l'intervalle compris entre la verticale de la fixation de transducteur 270 et le bord extrême de la pièce 211. On notera que le seul contact entre les pièces 220 ou 240 et la lame de flexion 210 s'effectue au niveau des fixations latérales, ici par chevilles.

Comme précédemment indiqué, ce second mode de réalisation s'applique tout particulièrement aux pèse-personnes ; mais il est naturellement susceptible d'autres applications. En ce qui concerne ses variantes de structure, on pourra se référer à la demande de brevet déjà citée EP-A-0 018 919 au nom de la demanderesse, dont le contenu descriptif est à considérer comme incorporé à la présente description.

**Revendications**

1. Récepteur de charge pour instrument de pesage, du type dans lequel la force antagoniste à la charge est fournie par un organe massif (10 ; 210) possédant au moins une zone, du genre étranglement (12, 14, 16, 18 ; 212), aménagée pour avoir une réponse élastique aux sollicitations, caractérisé par le fait que l'organe massif est muni de perçages ménagés au voisinage de la zone centrale axiale de l'organe massif prise dans son épaisseur, sensiblement sur la ligne neutre en déformation de l'organe massif, par le fait que la liaison entre cet organe massif (10 ; 210) et le reste du récepteur de charge (20, 40 ; 220, 240) est réalisée exclusivement par des organes de fixation solidaires du reste du récepteur de charge et engagés dans lesdits perçages, et par le fait que lesdits organes de fixation définissent le seul contact existant entre l'organe massif (10 ; 210) et le reste du récepteur de charge (20, 40 ; 220, 240).

2. Récepteur de charge selon la revendication 1, caractérisé par le fait que les organes de fixation sont des chevilles placées par paires (21, 23 ; 41, 43 ; 271, 273 ; 291, 293) sensiblement symétriquement, selon l'axe de l'organe massif, sur l'intervalle séparant une zone du genre étranglement (12, 14, 16, 18 ; 212) d'une autre zone étranglée ou d'une extrémité de l'organe massif.

3. Récepteur de charge selon l'une des revendications 1 et 2, caractérisé par le fait que l'organe massif (10) est un ensemble monobloc à quatre étranglements (12, 14, 16, 18) formant parallélogramme déformable, en particulier de géométrie rectangulaire ou en anneau, et par le fait que deux parties opposées (11, 13) de cet ensemble monobloc sont reliées par des paires d'organes de fixation du type cheville (21, 23, 41, 43) respectivement à une pièce (20) liée au bâti et à une pièce (40) liée au plateau porte-charge.

4. Récepteur de charge selon la revendication 3, caractérisé par le fait qu'il comporte un transducteur capacitif (70, 80, 90) qui s'appuie sur les mêmes parties opposées (11, 13) de l'organe massif (10) que le reste du récepteur de charge (20, 40), entre les organes de fixation précités (21, 23, 41, 43), et que lesdits organes de fixation sont placés à faible distance des étranglements (12, 14, 16, 18), en préservant toutefois les qualités élastiques de ceux-ci.

5. Récepteur de charge selon l'une des revendications 1 et 2, caractérisé par le fait que l'organe massif est une lame de flexion (210) à un seul étranglement (212), sollicitée de part et d'autre de cet étranglement par deux pièces-leviers (220, 240) qui sont montées sensiblement symétriquement en articulation d'une part avec le bâti (265) et d'autre part avec le plateau porte-charge (260), et que les deux pièces-leviers (220, 240) sont liées chacune à la lame de flexion (210) par une paire d'organes de fixation du type cheville (271, 273, 291, 293).

6. Récepteur de charge selon la revendication 5, caractérisé par le fait qu'il comporte un transducteur capacitif (270, 280, 290) qui s'appuie sur la lame de flexion (210) de part et d'autre de son étranglement (212) et au voisinage immédiat de ce dernier, et que le perçage prévu côté étranglement (212) pour recevoir un organe de fixation (273, 293) est placé suffisamment loin de l'étranglement pour ne pas perturber le comportement élastique de la lame de flexion (210) là où s'appuie le transducteur capacitif.

**Claims**

1. A load receiver for a weighing instrument of the type whereby the force which opposes the load is provided by a solid member (10 ; 210) having at least one zone, of the constricted sort (12, 14, 16, 18, 212) arranged to provide a resilient response to the stresses, characterised in that the solid member is provided with bores arranged near the axial central zone of the solid member taken in the thickness thereof, substantially on the neutral line of deformation of the solid member (10 ; 210), and the connection between this solid member (10 ; 210) and the rest of the load receiver (20, 40 ; 220, 240) comprises exclusively fixing members linked together with the rest of the load receiver and engaged in the said bores, and in that the said fixing members define the only contact between the solid member (10 ; 210) and the rest of the load receiver (20, 40 ; 220, 240).

2. A load receiver according to claim 1, characterised in that the fixing members are plugs placed in substantially symmetrical pairs (21, 23 ; 41, 43 ; 271, 273 ; 291, 293) along the axis of the solid member in the gap between a zone which is of the constricted sort (12, 14, 16, 18 ; 212) and another constricted zone or an end of the solid member.

3. A load receiver according to one of claims 1 and 2, characterised in that the solid member (10) is a one-piece body with four constrictions (12, 14, 16, 18) forming a deformable parallelogram, particularly of a rectangular or annular shape, and in that two opposite parts (11, 13) of this one-piece body are connected by pairs of fixing members of the plug type (21, 23, 41, 43) respectively to a part (20) connected to the frame and to a part (40) connected to the load-support plate.

4. A load receiver according to claim 3, characterised in that it comprises a capacitive transducer (70, 80, 90) which rests on the same opposite parts (11, 13) of the solid member (10) as the rest of the load receiver (20, 40), between the above-mentioned fixing members (21, 23, 41, 43), and that the said fixing members are placed at a small distance from the constrictions (12, 14, 16, 18) while maintaining the flexible qualities of these.

5. A load receiver according to one of claims 1 and 2, characterised in that the solid member is a flexible plate (210) having a single constriction (212), pulled on both sides of this constriction by two lever members (220, 240) which are mounted substantially symmetrically in an articulated manner on the one hand with the frame (265) and on the other hand with the load-support plate (260) and that the two lever members (220, 240) are each connected to the flexible plate (210) by a pair of fixing members of the plug type (271, 273, 291, 293).

6. A load receiver according to claim 5, characterised in that it comprises a capacitive transducer (270, 280, 290) which rests on the flexible plate (210) on either side of the constriction (212) thereof and in the immediate vicinity of the latter, and that the bore provided on the constriction side (212) to accommodate a fixing member (273, 293) is positioned sufficiently distant from the construction so as not to disturb the resilient behaviour of the flexible plate (210) where it rests on the capacitive transducer.

**Ansprüche**

1. Lastaufnehmer für ein Wiegeinstrument, bei welchem die der Belastung entgegenwirkende Kraft durch ein massives Element (10 ; 210) geliefert wird, welches wenigstens einen unter Belastung ein elastisches Ansprechverhalten zeigenden Bereich nach Art einer Einschnürung (12, 14, 16, 18 ; 212) aufweist, dadurch gekennzeichnet, daß das massive Element mit Bohrungen versehen ist, welche in bezug auf die Dicke des massiven Elements zunächst dem axialen Mittenbereich desselben im wesentlichen auf der Neutrallinie der Deformation des massiven Elements geformt sind, daß die Verbindung zwischen dem massiven Element (10 ; 210) und den übrigen Teilen des Lastaufnehmers (20, 40 ; 220, 240) allein durch fest mit den übrigen Teilen des Lastaufnehmers verbundene Befestigungselemente bewerkstelligt ist, welche sich mit den genannten Bohrungen in Eingriff befinden, und daß die genannten Befestigungselemente den einzigen zwischen dem massiven Element (10 ; 210) und den übrigen Teilen des Lastaufnehmers (20, 40 ; 220, 240) vorhandenen Kontakt darstellen.

2. Lastaufnehmer nach Anspruch 1, dadurch gekennzeichnet, daß die Befestigungselemente Bolzen sind, welche in in bezug auf die Achse des massiven Elements im wesentlichen symmetrischen Paaren (21, 23 ; 41, 43 ; 271, 273 ; 291, 293) in einem Bereich angeordnet sind, welcher einen nach Art einer Einschnürung ausgebildeten Bereich (12, 14, 16, 18 ; 212) von einem anderen eingeschnürten Bereich oder von einem Ende des massiven Elements trennt.

3. Lastaufnehmer nach einem der Ansprüche 1 und 2, dadurch gekennzeichnet, daß das massive Element (10) ein einstückiges Teil mit vier Einschnürungen (12, 14, 16, 18) ist, welches ein verformbares Parallelogramm insbesondere von rechteckiger oder ringförmiger geometrischer Gestalt darstellt, sowie dadurch, daß zwei einander gegenüber angeordnete Abschnitte (11, 13) des einstückigen Teils mittels Paaren von Befestigungselementen in Form von Bolzen (21, 23, 41, 43) mit einem mit dem Gestell verbundenen Teil (20) bzw. mit einem mit der Tragplattform verbundenen Teil (40) verbunden sind.

4. Lastaufnehmer nach Anspruch 3, dadurch gekennzeichnet, daß er einen kapazitiven Wandler (70, 80, 90) aufweist, welcher sich zwischen den genannten Befestigungselementen (21, 23, 41, 43) an den gleichen einander gegenüber angeordneten Teilen (11, 13) des massiven Elements (10) abstützt wie die übrigen Teile des Lastaufnehmers (20, 40), und daß die genannten Befestigungselemente in geringem Abstand von den Einschnürungen (12, 14, 16, 18) angeordnet sind, ohne dabei jedoch deren elastische Eigenschaften zu beeinträchtigen.

5. Lastaufnehmer nach einem der Ansprüche 1 und 2, dadurch gekennzeichnet, daß das massive Element ein eine einzige Einschnürung (212) aufweisender Biegestab (210) ist, welcher zu beiden Seiten der Einschnürung durch zwei Hebelteile (220, 240) belastet ist, welche im wesentlichen symmetrisch angeordnet und jeweils einerseits am Gestell (265) und andererseits an der Tragplattform (260) angelenkt sind, und daß die beiden Hebelteile (220, 240) jeweils mittels eines Paares von nach Art von Bolzen (271, 273, 291, 293) ausgebildeten Befestigungselementen mit dem Biegestab (210) verbunden sind.

6. Lastaufnehmer nach Anspruch 5, dadurch gekennzeichnet, daß er einen kapazitiven Wandler (270, 280, 290) aufweist, welcher in unmittelbarer Nähe der Einschnürung (212) zu beiden Seiten derselben mit dem Biegestab (210) verbunden ist, und daß die an der jeweiligen Seite der Einschnürung (212) vorgesehene Bohrung für die Aufnahme eines Befestigungselemente (273, 293) in einem genügenden Abstand von der Einschnürung angeordnet ist, um das elastische Ansprechverhalten des Biegestabs (210) in dem Bereich, in welchem der kapazitive Wandler damit verbunden ist, nicht zu beeinträchtigen.

Q
60
46
42
12
16
15
A
10
13
21
70
71
41
40
24
91
80
73
44
93
43
20
90
23
A
11
17
18
14
22
44 A
131
44
13
41
70
70
71
72
73
74
43
44A
44
132


FIG_1

FIG_2

46
44
42
146
147
144
48
49
149
148
45
FIG_3
FIG_4
B
15
12
16
175
180
170
13
195
11
200
190
14
18
17
FIG_5
182
181
202
201
FIG_6

FIG_7
210
211
212
213
270
280
290
292
FIG_8
220
230
231
232
233
234
235
240
250
251
252
253
254
255
260
265
270
280
290
211
212
213
FIG_9
220
222
224
226
230
231
235
239
240
242
244
246
250
251
255
271
273
290
291
292
293